# EUROPEAN PATENT SPECIFICATION

(11) **EP 2 248 768 B1**
(45) Date of publication and mention of the grant of the patent: **24.07.2013**
(21) Application number: 10004660.6
(22) Date of filing: 03.05.2010
(51) Int. Cl.: C02F 1/52, C02F 1/28

(54) **Use of a mineral product containing clays and mineral carbonates as a coagulating-flocculating agent for producing drinking water**
Verwendung von ein mineralisches Produkt mit Tonen und Karbonaten als Koagulation-Flockungsmittel für die Herstellung von Trinkwasser
Utilisation d'un produit minéral contenant des argiles et des carbonates minéraux comme un agent coagulant floculant-pour la production d'eau potable

(30) Priority: 05.05.2009 ES 200930130
(43) Date of publication of application: 10.11.2010
(73) Proprietor: Sociedad Anónima Minera Catalano-Aragonesa, 50001 Zaragoza (ES)
(72) Inventor: Tolosa Cortés, José Ignacio, 50001 Zaragoza (ES); Caballero López, Miguel Ángel, 50001 Zaragoza (ES); Aguaviva Ladrero, Nuria Isabel, 50001 Zaragoza (ES)
(74) Representative: Schäfer, Matthias W.

(56) References cited:
- EP-A1- 1 533 275
- EP-A1- 1 749 798
- EP-A1- 1 953 119
- EP-A1- 1 980 538
- US-B1- 6 461 535

## Description

### TECHNICAL FIELD OF THE INVENTION

The present invention falls within the field of the treatment of water intended for the production of water for human consumption. More specifically, it relates to a procedure for the treatment of water intended for the production of water for human consumption by means of coagulation-flocculation that uses a mineral product containing clays and mineral carbonates that is particularly useful in the technological improvement of said treatment processes.

### STATE OF THE ART PRIOR TO THE INVENTION

Water purification is one of the fields that has undergone the greatest development over the past years. Increasingly restrictive legislation established by the different Administrations, along with a greater social awareness, has led to an increase in efforts to search for appropriate treatment and purification systems. The specific field of treatments intended for the production of water for human consumption is of particular importance.

The production of water for human consumption may comprise various processes depending on the nature of the impurities in each type of water to be treated. All of these treatments are well known within the sector, the most common processes being disinfecting, filtering, coagulation-flocculation and sedimentation.

Coagulation-flocculation processes seek to eliminate material held in suspension in the water to be treated, chiefly improving the turbidity of the water. In addition there are specific regulations relating to the use of substances for the treatment of water intended for the production of water for human consumption, limiting the solutions to be adopted; hence amongst the authorized coagulants-flocculants are:
- Sodium alginate
- Modified starches
- Granular activated alumina
- Sodium aluminate
- Bentonite (as a flocculation coadjuvant)
- Iron (III) chlorosulphate, aluminium chloride, aluminium hydroxychloride and aluminium hydroxychlorosulphate
- Aluminium and iron (III) chloride and aluminium and iron (III) hydroxychloride
- Iron (III) chloride
- Iron coated with granular activated alumina
- Poly diallyl-dimethyl-ammonium
- Anionic and non-ionic polyacrylamides
- Cationic polyacrylamides
- Polyamines
- Aluminium polyhydroxychloride and aluminium polyhydroxychlorosulphate
- Aluminium polyhydroxychlorosilicate
- Aluminium polyhydroxysulphate silicate
- Sodium silicate
- Aluminium sulphate
- Aluminium and iron (III) sulphate
- Iron (II) sulphate and
- Iron (III) sulphate

Clays have been proposed for use in water purification processes due to some of the properties that said materials present, such as their high porosity, their high specific surface area and their high capacity for cation exchange that confers on them their characteristic high absorption and adsorption capacity.

Clays have been studied both in their natural and modified form. Said modifications have been aimed at varying certain characteristics of the clays. Thus the treatment of clays with inorganic acids produces the cleaning of the material and an increase in porosity and the specific surface area. An increase in porosity is also achieved by subjecting clays to thermal treatment. The objective sought has been that of preparing specific products for specific problems. By way of example, treatment of clays with certain organic reagents endows them with water-repelling characteristics that are taken advantage of for the selective elimination of organic pollutants.

These works have focused particularly on the use of clays in the treatment of wastewaters coming from industrial activities. It would seem that much less attention has been paid to studying the application of these materials in processes for the production of water for human consumption.

Some examples in scientific literature explain the use of clays in processes for the production of water for human consumption:
- RU 2.210.425 proposes a flocculant produced by the modification of a clay with an acrylamide copolymer in the presence of an alkaline reagent.
- GB 2.364.047 A proposes a composition consisting of a polysaccharide and a metallic salt. As optional ingredients it refers to a disinfecting agent, a clay and an alkaline agent.
- US 5.154.834 A1 proposes a mix of activated carbon, bentonite and a flocculating polymer for the elimination of halomethanes, their precursors, disinfecting products and other organic pollutants.
- GB 2.200.350 proposes a product that consists of obtaining a granular product by means of a mix of kaolin and a dolomitic type additive and its subsequent calcination at 900-950°C.
- US 4.116.828 proposes the use of sepiolite and attapulgite as filtering media for water treatment and purification. These clays eliminate pesticides, toxins, hormones, heavy metals and viruses.

The subject matter of the present invention refers to a procedure for the treatment of water intended for the production of water for human consumption by means of coagulation-flocculation that uses a mineral product, the said mineral product containing clays and mineral carbonates. Within the list of substances authorised by regulations there are some carbonates (calcium carbonate, calcium carbonate coated with manganese dioxide, sodium carbonate and semi-calcined dolomite) as pH correctors.

In scientific literature we can also find some representative examples of systems that contain mineral carbonates in their composition for the treatment of water intended for the production of water for human consumption:
- WO 2006/068496 A1 describes a water-treatment agent that eliminates chlorine and does not produce a bad taste. It consists of dolomite, salts of carboxylic acids and a gel-forming element that bonds with bacteria.
- RU 2.182.562 proposes an electrolytic water purification system. Carbonates (mainly dolomite) are used as a final step to purify and mineralise water.
- WO 95/26932 proposes a product based on calcium carbonate coming from marine fossils and a coagulant (aluminium chloride) as a way of eliminating algae and other elements in suspension in treatments to obtain drinking water.
- JP 7.178.389 proposes a column filled with a carbonate within a process for obtaining drinking water.
- US 5.198.114 proposes an activated carbon and dolomite filter. The dolomite would act as a bacteria nutrient. Furthermore it would provide a slightly basic taste and would add calcium and magnesium to the water.
- JP 2.198.691 proposes a mixture of calcium carbonate (from marine fossils) treated with silver and the same type of calcium carbonate treated at a temperature of between 100 and 800°C.

EP 1749798 A1 discloses the use of a mineral product for waste-water purfication by means of aerobic or anaerobic biological treatment. Said mineral product is characterized by containing clays and mineral carbonates.

EP 1533275 A1 discloses a composition for treating and purifying waste water polluted by the presence of organic or inorganic pollutants by means of physiochemical methods in particular or mixed processes of neutralization, precipitation, flocculation, coagulation and decolouration. The composition is thereby comprised of a natural mixture of dolomite and clay.

EP 1953119 A1 discloses a water purfication composition useful for removal of trace quantities of harmful contaminants like Arsenic ion addition to removal of micro organism like viruses, bacteria and cysts to make water suitable for human consumption. According to EP 1953119 A1 the composition comprises a) a coagulating agent which is a water soluble inorganic metal salt having trivalent cations; b) a flocculating agent which is a high molecular weight water soluble polymer; c) an adsorbent which is water insoluble oxide, hydroxide or oxo-hydroxides of titanium, zirconium, iron, copper or zinc; and d) a biocide which is a halogen compound.

Of among all the flocculants employed the use of polyacrylamides stands out particularly due to the wide range of processes in which they are useful, their easy handling and their efficacy. However there is a trend in regulations to reduce the maximum dose of (cationic, anionic and non-ionic) polyacrylamide permitted, as a flocculant in processes for the production of water for human consumption. This situation has mean that products that up until now have been known and used as coagulants-flocculants and coagulation coadjuvants together with polyacrylamides as flocculants, lose their effectiveness in terms of achieving a good elimination of suspended material and improving water turbidity. Alternative products to polyacrylamides have been suggested, in particular, poly diallyl-dimethyl-ammonium chloride, but they are not effective either technically or economically.

### DETAILED DESCRIPTION OF THE INVENTION

The technical problem is solved by the use of a mineral product according to claim 1. Advantageous embodiments are defined in the dependent claims.

To achieve a better technology in said water treatment processes by providing an alternative, more effective and economical production process, the procedure for the treatment of water intended for the production of water for human consumption, by means of coagulation-flocculation, that is the subject matter of the invention, is disclosed, said procedure using a mineral product that contains clays and mineral carbonates, in proportions of between 45 and 95% in weight in clays and between 4 and 55% in weight in mineral carbonates, said mineral product being modified by means of a treatment selected between a thermal treatment at a temperature of between 20 and 1200°C, during a period of time of between 10 seconds and 24 hours, and/or a treatment with a chemical product selected between an inorganic acid, an organic acid, one or more salts of inorganic acids and one or more salts of organic acids.

In particular, the clays are selected between sepiolite, palygorskite, smectites, illite, and their mixtures, as useful mineral products in the treatment of water intended for the production of water for human consumption. Both the clays and the mineral carbonates present in the mineral product that is the subject matter of the invention are an active part of the usefulness of the mineral product for the treatment of water intended for the production of water for human consumption.

The procedure that is the subject matter of the invention has the significant advantage of presenting an alternative production process that achieves better technical efficacy and a lower economic cost compared to known coagulants-flocculants commonly used in processes for the treatment of water intended for the production of water for human consumption.

Another important advantage of this procedure is the versatility of use of the mineral product since it can act either as a coagulant-flocculant or as a flocculation coadjuvant.

Further more it is important to underline that it maintains and even improves the efficacy of coagulation-flocculation systems with the doses of polyacrylamide that are now required.

This procedure presents the added advantage of the low economic cost of the mineral product used, since it is a product that is easy to locate, it is commonly available, easy to transport and store and it does not decompose, it is non-toxic and it is clean.

The use of this product in processes for the treatment of water intended for the production of water for human consumption provides an industrial alternative to the products that are currently known, with the consequent advantage of the diversification and broadening of the spectrum of purchases, in addition to enabling possible problems in the supply of conventional products, or possible situations of productive or economic monopolies to be avoided.

### PREFERRED EMBODIMENT OF THE INVENTION

The present invention refers to a procedure for the treatment of water intended for the production of water for human consumption by means of coagulation-flocculation, characterised by the use of a mineral product that contains:
- 45 to 95% in weight of clays, and;
- between 4 and 55% in weight of mineral carbonates,
and said mineral product has been modified by means of a treatment selected between:
- a thermal treatment at a temperature of between 20 and 1200° C, during a period of time of between 10 seconds and 24 hours, and/or;
- a treatment with a chemical product selected between an inorganic acid, one or more salts of inorganic acids and one or more salts of organic acids.

The clays, in turn, are selected between sepiolite, palygorskite, smectite, illite and their mixtures, in the following percentages:

| | % (w/w) |
|---|---|
| sepiolite and/or palygorskite | 5-80 |
| smectites | 5-40 |
| illite | 0-30 |

in relation to the total weight of the composition.

The smectites are selected from the group formed by: montmorillonite, beidellite, hectorite, nontronite, saponite, sauconite, stevensite, and their mixtures.

The mineral carbonates that form part of the mineral product that is the subject matter of the invention are selected between calcite (CaCO₃), magnesite (MgCO₃), dolomite (CaMg(CO₃)₂) and their mixtures.

In addition, the mineral product used in the invention may optionally contain up to 20% (w/w) of other minerals selected from the group formed by: feldspars, plagioclases, mica, quartz, kaolinite, talc, chlorite, vermiculite, halloysite and their mixtures.

Mineral carbonates are minerals that are widely known. Calcium carbonate (CaCO₃; calcite or limestone), magnesium carbonate (MgCO₃; magnesite) and double calcium and magnesium carbonate (ideal formula CaMg(CO₃)₂; dolomite) particularly stand out for their historical importance and industrial applications.

Mineralogically the nomenclature of clays refers to a specific group of phyllosilicates. The structure of these phyllosilicates is based on the stacking of layers of oxygen ions and hydroxyls. The tetrahedral groups of SiO₄⁴⁻ interconnect, sharing three of their four oxygens with other neighbours, and spread outward in infinite sheets, having the formula Si₂O₅²⁻, which is the basic unit of phyllosilicates. The tetrahedral silicon can be partly replaced by Al³⁺ or Fe³⁺. These tetrahedral layers bind to other octahedral layers of the gibbsite or brucite type. The bond plane between both layers if formed by the apical oxygens that are not shared by the SiO₄⁴⁻ tetrahedra and by the OH⁻ groups of the octahedral layer.

A similar bond can occur on the surface opposite the octahedral layer. Hence, the phyllosilicates may be formed by two layers, the tetrahedral plus octahedral layer, being known as 1:1 phyllosilicates, or by three layers, one octahedral and two tetrahedral layers, being known as 2:1 phyllosilicates. The unit formed by the bonding of these two or three layers is known as a sheet. If all of the octahedral holes are occupied, the sheet is known as trioctahedral. If only two thirds of the positions are occupied and the rest are vacant, it is known as dioctahedral.

The serpentines-kandites group are 1:1 phyllosilicates. Just like 2:1 phyllosilicates they include the talc-pyrophyllite, smectite, vermiculite, illite, and mica and chlorite groups.

Also included in the term clays, are the minerals of the hormite group, formed by minerals of the palygorskite-sepiolite family. Unlike the rest of the phyllosilicates, which are laminar, they are usually fibrous as the basal layer of oxygens is continuous, but the apical oxygens are inverted every six tetrahedra (sepiolite) or every four tetrahedra (palygorskite/attapulgite). This inversion causes channels to form in which large size molecules can be accommodated.

The mineral product used in the invention displays a mineralogical composition that contains between 45 and 95% of clays and between 4 and 55% of mineral carbonates. Said clays are a mixture of sepiolite and/or palygorskite (between 5 and 80%), smectites (between 5 and 40%) and illite (between 0 and 30%). The mineral product may have up to 20% of other minerals, which may be feldspars, plagioclases, mica, quartz, kaolinite, talc, chlorite, vermiculite, haloysite and their mixes. The percentages always refer to the total composition.

To obtain the mineral product a deposit may be selectively mined, extracting a clayey rock that contains the ingredients that form part of the mineral product in the percentages indicated. Said clayey rock is extracted from the deposit with more than 30% moisture. It then undergoes the processes of stockpiling, crushing, drying and granulating, for which any of the systems customarily utilized in industry may be used.

Another aim of the invention is to obtain the mineral product described through a mixture of several components, each of which will contain one or several of the ingredients that form part of the mineral product. Said mixture may be carried out by means of the methods customarily utilized by industry, subsequently undergoing crushing, drying and granulating methods

The mineral product used in the invention is presented preferably as a granular porous product with a grain size of less than 5 mm, preferably less than 0.6 mm, preferably less than 150 µm, preferably less than 10 µm.

Diverse processes for modifying clays have previously been mentioned, such as thermal treatments, acid activation or addition of organic reagents. Given that these processes are known and regularly used in industry, the subject matter of the invention is also considered to be a procedure for the treatment of water that uses a mineral product that is the result of the modification of the mineral product that is the subject matter of the present invention, by any of said treatments.

According to the above, the present invention also covers a procedure for the treatment of water that uses a mineral product such as that previously defined that is modified by a thermal treatment process. Said thermal treatment process takes place at a temperature of between 20 and 1200°C during a period of time of between 10 seconds and 24 hours. Following the thermal treatment the mineral product can undergo a granulation process to achieve the previously indicated required grain size.

Likewise, the present invention also covers a procedure for the treatment of water that uses a mineral product that contains clays and mineral carbonates such as that previously defined that is modified by a treatment process with organic and/or inorganic chemical products. In particular, said modification is carried out by the treatment of the mineral product with organic and/or inorganic acids and their salts.

Also considered as the subject matter of the invention is the use of the mineral products described in water treatment processes intended for the production of water for human consumption in combination with bactericidal agents, descaling agents, pH correctors, coagulants-flocculants, bleaching agents and their mixtures.

The mineral product can be added either in its solid form or in the form of a suspension. Said suspension can be obtained by mixing the mineral product that is the subject matter of the invention with potable water or water to be treated. The amount of mineral product to be used is between 0.05mg/l and 50,000 mg/l, preferably between 0.1 mg/l and 20,000 mg/l, preferably between 0.5 mg/l and 1,000 mg/l, and most preferably between 1 mg/l and 200 mg/l, always in dry matter, in relation to a litre of water to be treated, intended for the production of water for human consumption. The addition of the mineral product that is the subject matter of the invention is carried out at the coagulation-flocculation stage, either in one step or several consecutive steps.

### EXAMPLES OF USES OF THE INVENTION

The tests performed were carried out according to the known Jar Test. Along with the product that is the subject matter of the invention, commercial coagulants-flocculants were used.

Evaluation of the utility of the mineral product used in the procedure for the treatment of water intended for the production of water for human consumption that is the subject matter of the invention is based on the measurement of turbidity in NTUs.

The present invention is illustrated by means of the following examples that should not in any way be considered to be restrictive in terms of their scope.

**EXAMPLE 1**: The example illustrates the results of different tests on treating water intended for human consumption in a coagulation-flocculation process. The water without any type of treatment had a turbidity of 28.80 NTU and a pH of 7.75.

**TABLE 1**

| | Test 1 | Test 2 | Test 3 |
|---|---|---|---|
| Aluminium polychloride | 50 ppm | 50 ppm | 50 ppm |
| Poly diallyl-dimethyl-ammonium 20 | ppm | - | - |
| AD | - | 20 ppm | 20 ppm |
| Polyacrylamide | 0.02 ppm | - | 0.02 ppm |
| Turbidity (NTU) | 3.77 | 4.72 | 3.63 |

The example illustrates how the product used in the procedure that is the subject matter of the invention (which in the tables is given the name AD) is capable of obtaining good results in combination with aluminium polychloride, avoiding the use of poly diallyl-dimethyl-ammonium and polyacrylamides. The use of the legally established amount of polyacrylamide shows that its effectiveness is totally comparable to the use of poly diallyl-dimethyl-ammonium.

**EXAMPLE 2**: The example illustrates the results of the different tests on the treatment water intended for human consumption in a coagulation-flocculation process. The water without any type of treatment had a turbidity of 25.07 NTU and a pH of 7.54.

**TABLE 2**

| | Test 1 | Test 2 | Test 3 |
|---|---|---|---|
| Aluminium polychloride | 50 ppm | 50 ppm | 50 ppm |
| Poly diallyl-dimethyl-ammonium | - | 50 ppm | - |
| AD | - | - | 20 ppm |
| Polyacrylamide | 0.02 ppm | 0.02 ppm | 0.02 ppm |
| Turbidity (NTU) | 15.17 | 5.70 | 5.82 |

The example illustrates how, in this case, the addition of a second coagulant-flocculant (either poly diallyl-dimethyl-ammonium or the product that is the subject matter of the invention (AD)) improves the efficacy of the process. Between both products the product that is the subject matter of the invention is observed to have a greater efficacy. Only 20 ppm are required compared to the 50 ppm of poly diallyl-dimethyl-ammonium needed.

**EXAMPLE 3**: The example illustrates the results of different tests on the treatment of water intended for human consumption in a coagulation-flocculation process. The water without any type of treatment had a turbidity of 42 NTU and a pH of 8.14.

**TABLE 3**

| | Test 1 | Test 2 | Test 3 |
|---|---|---|---|
| Aluminium polychloride | 20 ppm | - | 20 ppm |
| AD | - | 0.1 ppm | 0.1 ppm |
| Turbidity (NTU) | 14 | 16 | 7 |

The example illustrates the efficacy of aluminium polychloride and the AD product that is the subject matter of the invention as the only coagulants-flocculants. It can be observed that with 0.1 ppm of AD we obtain a result that is comparable to the addition of 20 ppm of aluminium polychloride. The use of both products together slightly improves the result obtained.

## Claims

1. Use of a mineral product that contains clays and mineral carbonates, in proportions of between 45 and 95% in weight in clays and between 4 and 55% in weight in mineral carbonates, said mineral product being modified by means of a treatment selected between a thermal treatment at a temperature of between 20 and 1200°C, during a period of time of between 10 seconds and 24 hours, and/or a treatment with a chemical product selected between an inorganic acid, an organic acid, one or more salts of inorganic acids and one or more salts of organic acids, as coagulating-flocculating agent in combination with Aluminum Polychloride avoiding the use of poly diallyl-dimethyl-ammonium and polyacrylamides in a procedure for the treatment of water for human consumption by means of coagulation-flocculation.

2. Use of a mineral product according to claim 1, wherein the clays included in the product include clays selected from the group formed by sepiolite, palygorskite, smectites, illite and their mixtures.

3. Use of a mineral product according to claim 2, wherein said clays are present in the following percentages in relation to the total weight of the composition: sepiolite and/or palygorskite, between 5 and 80% (w/w), smectites between 5 and 40% (p/p) and illite, between 0 and 30 % (w/w).

4. Use of a mineral product according to claim 2 and 3, wherein the smectites are selected from the group formed by montmorillonite, beidellite, hectorite, nontronite, saponite, stevensite and their mixtures.

5. Use of a mineral product according to one of the claims 1 to 4, wherein said mineral carbonates included in the product are selected from the group formed by CaCO₃, MgCO₃, CaMg(CO₃)₂ and their mixtures.

6. Use of a mineral product according to any of the preceding claims, wherein the mineral product additionally includes up to 20% in weight of minerals selected from the group formed by feldspars, plagioclases, mica, quartz, kaolinite, talc, chlorite, vermiculite, haloysite and their mixtures, always in relation to the total weight of the composition.

7. Use of a mineral product according to any of the preceding claims, wherein the mineral product may be presented as a porous granular product with a grain size of less than 5 mm, preferably less than 0.6 mm, preferably less than 150 µm, and preferably less than de 10 µm.

8. Use of a mineral product according to any of the claims 1 to 7, wherein the mineral product is used as a coagulating-flocculating coadjuvant.

9. Use of a mineral product according to one of the claims 1-8, wherein additionally bactericidal agents, descaling agents, pH correctors, additional coagulants-flocculants, bleaching agents and their mixtures are used in the procedure for the treatment of water for human consumption.

10. Use of a mineral product according to one of claims 1 to 9, wherein the amount of the mineral product is between 0.05 and 50,000 mg/l in dry matter in relation to one litre of water to be treated, intended for the production of water for human consumption.

11. Use of a mineral product according to one of the claims 1 to 10, wherein the mineral product is added in solid form.

12. Use of a mineral product according to one of the claims 1 to 10, wherein the mineral product is added in the form of a liquid suspension.

## Patentansprüche

1. Verwendung eines Mineralprodukts, das Tone und mineralische Karbonate, in Anteilen zwischen 45 und 95 Gewichts % an Tonen und zwischen 4 und 55 Gewichts % an mineralischen Karbonaten enthält, wobei das Mineralprodukt mittels einer Behandlung modifiziert wird, ausgewählt aus einer thermischen Behandlung bei einer Temperatur zwischen 20°C und 1200°C während einer Zeitdauer zwischen 10 Sekunden und 24 Stunden und/oder einer Behandlung mit einem chemischen Produkt ausgewählt aus einer anorganischen Säure, einer organischen Säure, einem oder mehreren Salzen anorganischer Säuren und einem oder mehreren Salzen organischer Salze als Koagulations - Flokkulationsmittel in Kombination mit Aluminiumpolychlorid, wodurch die Verwendung von Polydiallyldimethylammonium und Polyacrylamid vermieden wird, in einem Verfahren zur Aufbereitung von Trinkwasser mittels Koagulation-Flokkulation.

2. Verwendung eines Mineralprodukts nach Anspruch 1, wobei die Tone, die im Produkt enthalten sind, Tone beinhalten, die aus der Gruppe ausgewählt sind, welche durch Sepiolith, Palygorskit, Smektiten, Illit und deren Mischungen gebildet sind.

3. Verwendung eines Mineralprodukts nach Anspruch 2, wobei die Tone in folgenden Prozentsätzen im Verhältnis zum Gesamtgewicht der Mischung vorhanden sind: Sepiolith und/oder Palygorskit zwischen 5 und 80 Gewichts %, Smektite zwischen 5 und 40 Gewichts % und Illit zwischen 0 und 30 Gewichts %.

4. Verwendung eines Mineralprodukts nach Anspruch 2 oder 3, wobei die Smektite aus der Gruppe ausgewählt sind, welche durch Montmorillonit, Beidellit, Hectorit, Nontronit, Saponit, Stevensit und deren Mischungen gebildet sind.

5. Verwendung eines Mineralprodukts nach einem der Ansprüche 1 bis 4, wobei die mineralischen Karbonate, die im Produkt enthalten sind, aus der Gruppe ausgewählt sind, welche durch CaCO₃, MgCO₃ , CaMg(CO₃)₂ und deren Mischungen gebildet sind.

6. Verwendung eines Mineralprodukts nach einem der vorangehenden Ansprüchen, wobei das Mineralprodukt zusätzlich bis zu 20 Gewichtsprozent an Mineralien enthält, die aus der Gruppe ausgewählt sind, die aus Feldspat, Plagioklasen, Glimmer, Quarz, Kaolinit, Talk, Chloriten, Vermiculit, Halloysit und deren Mischungen gebildet sind, immer im Verhältnis zum Gesamtgewicht der Zusammensetzung.

7. Verwendung eines Mineralprodukts nach einem der vorangehenden Ansprüche, wobei das Mineralprodukt als poröses granulares Produkt dargestellt sein kann mit einer Korngröße von weniger als 5 mm, vorzugsweise weniger als 0,6 mm, vorzugsweise weniger als 150 µm, und vorzugsweise weniger als 10 µm.

8. Verwendung eines Mineralprodukts nach einem der Ansprüche 1 bis 7, wobei das Mineralprodukt als Koagulation - Flokkulationshilfsstoff verwendet wird.

9. Verwendung eines Mineralprodukts nach einem der Ansprüche 1 bis 8, wobei zusätzlich bakterizide Mittel, Wasserenthärtungsmittel, PH-Korrekutrmittel, ergänzende Koagulation - Flokkulationsmittel, Bleichmittel und Mischungen davon in dem Verfahren zur Aufbereitung von Trinkwasser verwendet werden.

10. Verwendung eines Mineralprodukts nach einem der Ansprüche 1 bis 9, wobei die Menge des Mineralprodukts, die zur Produktion von Trinkwasser vorgesehen ist, in Trockenmasse im Verhältnis zu einem aufzubereitenden Liter Wasser zwischen 0,05 und 50.000 mg/l beträgt.

11. Verwendung eines Mineralprodukts nach einem der Ansprüche 1 bis 10, wobei das Mineralprodukt in fester Form zugeführt wird.

12. Verwendung eines Mineralprodukts nach einem der Ansprüchen 1 bis 10, wobei das Mincralprodukt in Form einer flüssigen Suspension zugeführt wird.

## Revendications

1. Utilisation d'un produit minéral contenant des argiles et des carbonates de minéraux dans des proportions comprises entre 45 et 95% du poids pour les argiles et entre 4 et 55% du poids pour les carbonates minéraux, ledit produit minéral étant modifié par un traitement sélectionné entre un traitement thermique à une température comprise entre 20 et 1200°C pendant une durée allant de 10 secondes à 24 heures et/ou un traitement avec un produit chimique sélectionné entre un acide inorganique, un acide organique, un ou plusieurs sels d'acides inorganiques et un ou plusieurs sels d'acides organiques, en tant qu'agent coagulant-floculant associé à du polychlorure d'aluminium, dans le but d'éviter l'utilisation de diméthyl-poly-diallyl-ammonium et de polyacrylamides, pour la production d'eau potable au moyen d'un procédé de coagulation-floculation.

2. Utilisation d'un produit minéral conformément à la Revendication 1 où les argiles contenues dans le produit incluent des argiles sélectionnées dans un groupe formé de sépiolite, palygorskite, smectites, illites et leurs mélanges.

3. Utilisation d'un produit minéral conformément à la Revendication 2 où lesdites argiles sont présentes dans les proportions suivantes par rapport au poids total de la composition : sépiolite et/ou palygorskite : entre 5 et 80% (m/m), smectites : entre 5 et 40% (m/m) et illites : entre 0 et 30% (m/m).

4. Utilisation d'un produit minéral conformément aux Revendications 2 et 3 où les smectites sont sélectionnées dans un groupe formé de montmorillonite, beidellite, hectorite, nontronite, saponine, stevensite et leurs mélanges.

5. Utilisation d'un produit minéral conformément à l'une des Revendications 1 à 4 où lesdits carbonates de minéraux contenus dans le produit sont sélectionnés dans un groupe formé de CaCO₃; MgCO₃, CaMg(CO₃)₂ et leurs mélanges.

6. Utilisation d'un produit minéral conformément à l'une quelconque des Revendications précédentes où le produit minéral comprend en outre jusqu'à 20% du poids de minéraux sélectionnés dans le groupe formé de feldspars, plagioclases, mica, quartz, kaolinite, talc, chlorite, vermiculite, halyosite et leurs mélanges, toujours par rapport au poids total de la composition.

7. Utilisation d'un produit minéral conformément à l'une quelconque des Revendications précédentes où le produit minéral peut se présenter comme un produit granulaire poreux présentant une taille de grain inférieure à 5 mm, de préférence inférieure à 0,6 mm, de préférence inférieure à 150 µm et de préférence inférieure à 10 µm.

8. Utilisation d'un produit minéral conformément à l'une quelconque des Revendications 1 à 7 où le produit minéral est utilisé comme co-adjuvant coagulant-floculant.

9. Utilisation d'un produit minéral conformément à l'une des Revendications 1 à 8 où des agents bactéricides, agents détartrants, correcteurs de pH, coagulants-floculants additionnels, agents de blanchiment et leurs mélanges sont en outre utilisés dans la procédure de production d'eau propre à la consommation humaine.

10. Utilisation d'un produit minéral conformément à l'une des Revendications 1 à 9 où la quantité de produit minéral est comprise entre 0,05 et 50 000 mg/l dans la matière sèche par rapport à un litre d'eau à traiter, pour la production d'eau potable.

11. Utilisation d'un produit minéral conformément à l'une des Revendications 1 à 10 où le produit minéral est ajouté sous forme solide.

12. Utilisation d'un produit minéral conformément à l'une des Revendications 1 à 10 où le produit minéral est ajouté sous forme de suspension liquide.
